# EUROPEAN PATENT APPLICATION

(11) **EP 2 897 027 A2**
(43) Date of publication of application: **22.07.2015**
(21) Application number: 13793420.4
(22) Date of filing: 24.07.2013
(51) Int. Cl.: G06F 3/023

(54) **INPUT METHOD, APPARATUS AND TERMINAL**

(30) Priority: 12.09.2012 CN 201210336341
(71) Applicant: ZTE Corporation, Guangdong Province 518057 (CN)
(72) Inventor: WANG, Xin, Shenzhen Guangdong Province 518057 (CN)
(74) Representative: Novagraaf Technologies
(86) International application number: PCT/CN2013/080053
(87) International publication number: WO 2013/174341

(57) **Abstract**

An input method, apparatus and terminal are disclosed. The method comprises: displaying a virtual three-dimensional keyboard at an exterior of a terminal; detecting that there is a key input on the virtual three-dimensional keyboard; determining a key value according to the key input, and displaying the key value on a screen of the terminal. By means of the present invention, the keyboard is displayed at one side of the terminal in a three-dimensional virtual mode, and there is no need to occupy the space on the screen of the terminal, and convenience is provided for a user to search the content displayed on the terminal screen; the user can click the key of the virtual three-dimensional keyboard, and the terminal can determine the press of the key and determine the key value, therefore, a text can be quickly and conveniently input; and moreover, the user can define the dimensions of the virtual three-dimensional keyboard and the spacing among the keys, so that the probability of error touch can be reduced to some extent.

## Description

### Technical Field

The present invention relates to the field of communications, including, e.g., an input method, apparatus and terminal.

### Background

At present, most of daily office software is based on a windows operation system. Due to the limitations of systems, most of past mobile terminal devices neither support normal office software, nor can replace the position of notebooks. With the advancing of a win8 system, the current mobile terminals transit generally from original pure entertainment devices to office/entertainment two-in-one devices. In the cases of travelling and business travelling, mobile terminal devices having smaller volumes and lighter weights are used as office devices, and have a more portable utilization value.

However, since the volumes of the terminals are small and most of them adopt a touch screen input manner, the size of the screen restricts the size of a virtual keyboard. The touch region of each key on the virtual keyboard thus also becomes very small, resulting in inconvenience in touch and easily resulting in error touches; in addition, the virtual keyboard will also occupy part of the space of the screen, leading to a smaller visible area for the user and inconvenience in reference.

### Summary

An input method, apparatus and terminal are provided in the embodiments of the present invention, so as to at least solve the problem in the related arts that key regions of a virtual keyboard are small with error touches being easily caused, and the virtual keyboard occupies part of the space of the terminal screen, leading to a smaller visible area for the user and inconvenience in reference.

According to one aspect of the embodiments of the present invention, an input method is provided, comprising: displaying a virtual three-dimensional keyboard at the exterior of a terminal; detecting that there is a key input on the virtual three-dimensional keyboard; and determining a key value according to the key input, and displaying the key value on a screen of the terminal.

According to an embodiment of the present invention, determining the key value according to the key input comprises: calculating a position coordinate of the key input with respect to the terminal; matching the position coordinate of the key input with a preset coordinate set of the virtual three-dimensional keyboard; and determining the key value according to a matching result.

According to an embodiment of the present invention, before detecting that there is the key input on the virtual three-dimensional keyboard, the above-mentioned method further comprises: detecting whether there is the key input on the virtual three-dimensional keyboard utilizing infrared reflective characteristics.

According to an embodiment of the present invention, detecting whether there is the key input on the virtual three-dimensional keyboard utilizing infrared reflective characteristics comprises: detecting whether there is the key input on the virtual three-dimensional keyboard utilizing the rotation of an infrared transceiving-apparatus.

According to an embodiment of the present invention, calculating the position coordinate of the key input with respect to the terminal comprises: when the infrared transceiving-apparatus receives a reflected infrared ray, recording a reflection time and a rotation angle of the infrared transceiving-apparatus with respect to a predetermined axis; calculating the distance from the key input to the infrared transceiving-apparatus according to the reflection time and the speed of the infrared ray; and calculating the position coordinate of the key input according to the distance from the key input to the infrared transceiving-apparatus and the rotation angle of the infrared transceiving-apparatus with respect to the predetermined axis.

According to an embodiment of the present invention, a rotatable motor is disposed on the infrared transceiving-apparatus.

According to an embodiment of the present invention, the coordinate set of the virtual three-dimensional keyboard is a set of coordinate range of each key on the virtual three-dimensional keyboard, wherein the coordinate range of each key is calculated according to the size of an occupation region, key sizes, key spacings, the distance between each key and the terminal of the virtual three-dimensional keyboard which is preset.

According to an embodiment of the present invention, the virtual three-dimensional keyboard is a standard keyboard or a keyboard of a user-defined keyboard format.

According to another aspect of the embodiments of the present invention, an input apparatus is provided, comprising: a first displaying component configured to display a virtual three-dimensional keyboard at the exterior of a terminal; a detecting component configured to detect that there is a key input on the virtual three-dimensional keyboard; a determining component configured to determine a key value according to the key input; and a second displaying component configured to display the key value on a screen of the terminal.

According to an embodiment of the present invention, the determining component comprises: a calculating element configured to calculate a position coordinate of the key input with respect to the terminal; a matching element configured to match the position coordinate of the key input with a preset coordinate set of the virtual three-dimensional keyboard; and a determining element configured to determine the key value according to a matching result.

According to an embodiment of the present invention, the detecting component is further configured to detect whether there is the key input on the virtual three-dimensional keyboard utilizing infrared reflective characteristics.

According to still another aspect of the embodiments of the present invention, a terminal is provided, comprising any one of the above-mentioned input apparatuses.

By means of the embodiments of the present invention, the keyboard is displayed at one side of the terminal in a three-dimensional virtual mode without occupying the space on the terminal screen, thus making it convenient for a user to refer to the content displayed on the terminal screen; the user can click a key of the virtual three-dimensional keyboard, and the terminal determines the press of the key and determines the key value, thus achieving a quick and convenient text input; and moreover, the user can self-define the size of the virtual three-dimensional keyboard and the spacings among the keys, thus reducing the probability of error touch to some extent.

### Brief Description of the Drawings

Drawings, provided for further understanding of the embodiments of the present invention and forming a part of the specification, are used to explain the disclosure together with embodiments of the disclosure rather than to limit the disclosure. In the drawings:
Fig. 1 is a flowchart of an input method according to the embodiments of the present invention;
Fig. 2 is a structure diagram of an input apparatus according to the embodiments of the present invention;
Fig. 3 is a structure diagram of an input apparatus according to a preferred embodiment of the present invention;
Fig. 4 is a structure diagram of a terminal according to a preferred embodiment of the present invention;
Fig. 5 is an overall schematic diagram of a virtual three-dimensional keyboard and a terminal according to a preferred embodiment of the present invention;
Fig. 6 is a sectional schematic diagram of a virtual three-dimensional keyboard and a terminal according to a preferred embodiment of the present invention;
Fig. 7 is a schematic diagram of the coordinate system calculation of a key input according to a preferable embodiment of the present invention; and
Fig. 8 is a flowchart of an input method according to a preferable embodiment of the present invention.

### Detailed Description of the Embodiments

Note that, the embodiments of the disclosure and the features of the embodiments can be combined with each other if there is no conflict. The embodiments of the present invention will be explained below with reference to the drawings and in conjunction with the embodiments in detail.

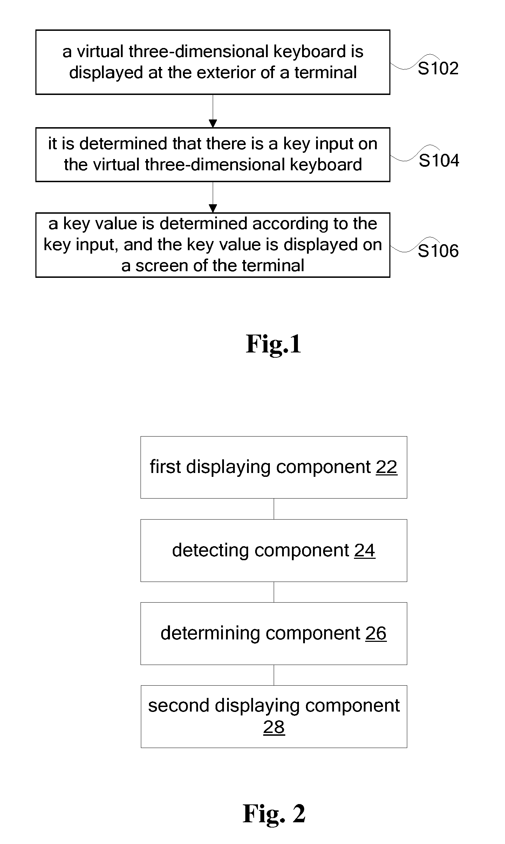

An input method is provided the embodiments of the present invention, and Fig. 1 is a flowchart of the input method according to the embodiments of the present invention. As shown in Fig. 1, the method comprises the following step S102 to step S106:
Step S102, a virtual three-dimensional keyboard is displayed at the exterior of a terminal;
Step S104, it is detected that there is a key input on the virtual three-dimensional keyboard; and
Step S106, a key value is determined according to the key input, and the key value is displayed on a screen of the terminal.

In the related arts, key regions of a virtual keyboard are small with error touches being easily caused, and the virtual keyboard occupies part of the space of the terminal screen, leading to a smaller visible area for the user and inconvenience in reference. In the embodiments of the present invention, the keyboard is displayed at one side of the terminal in a three-dimensional virtual mode without occupying the space on the terminal screen, thus making it convenient for a user to refer to the content displayed on the terminal screen; the user can click a key of the virtual three-dimensional keyboard, and the terminal determines the press of the key and determines the key value, thus achieving a quick and convenient text input; and moreover, the user can self-define the size of the virtual three-dimensional keyboard and the spacings among the keys, thus reducing the probability of error touch to some extent.

In actual applications, it can be implemented to display the virtual three-dimensional keyboard at the exterior of a terminal by means of the stereoscopic projection technology. The virtual three-dimensional keyboard is displayed by means of being embedded in a three-dimensional output component at one end of the terminal device, and the parameters of a three-dimensional image output thereby, such as a region size, key sizes and key spacings, can be preset, that is, the three-dimensional image is controllable. The virtual three-dimensional keyboard can be a standard keyboard, and can also be a keyboard of a user-defined keyboard format.

Which key the user presses can be determined by means of a corresponding relationship between contents (such as letters and strokes) stored in the terminal that may be input by the user and key positions, so that it is displayed on the terminal screen. A preferred embodiment is provided in the embodiments of the present invention, and in step S106, determining the key value according to the key input comprises: a position coordinate of the key input with respect to the terminal is calculated; the position coordinate of the key input is matched with the preset coordinate set of the virtual three-dimensional keyboard; and the key value is determined according to the matching result. In the present preferred embodiment, a set of coordinate range (because each key is a cube, the position of the key can be a coordinate range, and it certainly can also be a coordinate value, such as a coordinate value of the centre of the key) of each key on the virtual three-dimensional keyboard calculated according to the size of an occupation region, key sizes, key spacings, the distance between each key and the terminal of the virtual three-dimensional keyboard is pre-stored in the terminal, and when there is an input conducted by a key press action of the user, the coordinate of the key input is calculated and is matched with the set so as to determine the user input.

It should be noted that the coordinate set of the virtual three-dimensional keyboard is the above-mentioned set of the coordinate range of each key. The above-mentioned parameters of the virtual three-dimensional keyboard, such as the size of an occupation region, key sizes, key spacings, the distance between each key and the terminal can be user-defined.

It can be implemented to calculate the position coordinate of the key input with respect to the terminal utilizing infrared distance measurement positioning, and certainly, it can also be implemented by means of other monitoring and distance measurement methods. An introduction of the method for determining a key input by means of the infrared distance measurement is now provided as follows:
Before step S104, the above-mentioned method further comprises: it is detected whether there is a key input on the virtual three-dimensional keyboard utilizing infrared reflective characteristics. Preferably, it is detected whether there is a key input on the virtual three-dimensional keyboard utilizing the rotation of an infrared transceiving-apparatus.

Calculating the position coordinate of the key input with respect to the terminal comprises: when the infrared transceiving-apparatus receives a reflected infrared ray, a reflection time and a rotation angle of the infrared transceiving-apparatus with respect to a predetermined axis are recorded; the distance from the key input to the infrared transceiving-apparatus is calculated according to the reflection time and the speed of the infrared ray; and the position coordinate of the key input is calculated according to the distance from the key input to the infrared transceiving-apparatus and the rotation angle of the infrared transceiving-apparatus with respect to the predetermined axis.

According to an embodiment of the present invention, the above-mentioned rotation of the infrared transceiving-apparatus can be implemented by disposing a rotatable motor on the infrared transceiving-apparatus.

An input apparatus is provided in the embodiment of the present invention, wherein the apparatus can be configured to implement the above-mentioned input method. Fig. 2 is a structure diagram of the input apparatus according to the embodiments of the present invention. As shown in Fig. 2, the input apparatus comprises a first displaying component **22,** a detecting component **24,** a determining component **26** and a second displaying component **28.** The structure thereof is described in details below.

The first displaying component **22** is configured to display a virtual three-dimensional keyboard at the exterior of a terminal; the detecting component **24** is connected to the first displaying component **22** and is configured to detect that there is a key input on the virtual three-dimensional keyboard displayed by the first displaying component **22;** the determining component **26** is connected to the detecting component **24** and is configured to determine a key value according to the key input detected by the detecting component **24;** and the second displaying component **28** is connected to the determining component **26** and is configured to display the key value determined by the determining component **26** on a screen of the terminal.

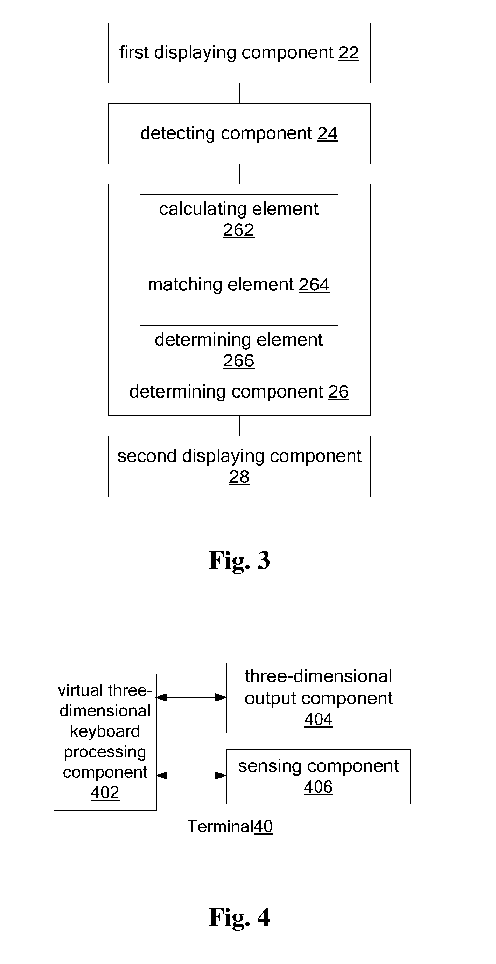

As shown in Fig. 3, the determining component **26** comprises: a calculating element **262** configured to calculate the position coordinate of the key input with respect to the terminal; a matching element **264** connected to the calculating element **262** and configured to match the position coordinate of the key input with a preset coordinate set of the virtual three-dimensional keyboard; and a determining element **266** connected to the matching element **264** and configured to determine the key value according to a matching result.

Preferably, the detecting component **24** is further configured to detect whether there is a key input on the virtual three-dimensional keyboard utilizing infrared reflective characteristics. Preferably, whether there is a key input on the virtual three-dimensional keyboard can be detected utilizing the rotation of an infrared transceiving-apparatus.

Preferably, the calculating element **262** comprises: a recording sub-element configured to record, when the infrared transceiving-apparatus receives a reflected infrared ray, a reflection time and a rotation angle of the infrared transceiving-apparatus with respect to a predetermined axis; a first calculation sub-element configured to calculate the distance from the key input to the infrared transceiving-apparatus according to the reflection time and the speed of the infrared ray; and a second calculation sub-element configured to calculate the position coordinate of the key input according to the distance from the key input to the infrared transceiving-apparatus and the rotation angle of the infrared transceiving-apparatus with respect to the predetermined axis.

Preferably, a rotatable motor is disposed on the infrared transceiving-apparatus.

A terminal is further provided in the embodiments of the present invention, comprising any one of the above-mentioned input apparatuses.

It should be noted that the input apparatus and terminal described in the apparatus embodiments correspond to the above-mentioned method embodiments, and the specific implementation of the apparatus embodiments has been described in detail in the method embodiments, which need not be described here redundantly.

It can be seen from the description above that it is adopted a stereoscopic display manner to display a virtual three-dimensional keyboard at one side of a terminal device in the embodiments of the present invention, for example, when the terminal device is placed on a desk, the virtual three-dimensional keyboard is displayed between a user and the terminal device, thus making it convenient for the user to conduct input. It is implemented the virtual three-dimensional keyboard on the basis of stereoscopic projection and infrared distance measurement positioning in the embodiments of the present invention. The virtual three-dimensional keyboard is output at one side of the terminal device utilizing a three-dimensional output component, so that the user is able to see a three-dimensional keyboard clearly; it is implemented to determine the a key value utilizing a sensing component, wherein the sensing component monitors whether there is a key input utilizing infrared reflective characteristics; and when it is detected that there is a key input, a coordinate of the position where a user input medium is located is calculated from the reflection time and the speed of the infrared ray by the infrared transceiving-apparatus, and the coordinate is matched with the coordinate system in the system so as to determine the key value.

In order to make the technical solutions and implementation methods of the embodiments of the present invention more clear, the implementation process thereof will be described in details in combination with a preferred embodiment below.

Fig. 4 is a structure diagram of a terminal according to a preferred embodiment of the present invention. As shown in Fig. 4, a terminal **40** which can implement input via a virtual three-dimensional keyboard comprises: a virtual three-dimensional keyboard processing component **402,** a three-dimensional output component **404** and a sensing component **406,** wherein the virtual three-dimensional keyboard processing component **402** is connected to the three-dimensional output component **404** and the sensing component **406** through bidirectional communication interface. A description of the function of each component will be provided in details below.

The virtual three-dimensional keyboard processing component **402,** as a core for implementing the virtual three-dimensional keyboard, controls the actions of the three-dimensional output component **404** and the sensing component **406.** The virtual three-dimensional keyboard processing component **402** contains a software part and a hardware part. When the virtual three-dimensional keyboard is used by the user, the virtual three-dimensional keyboard processing component **402** controls the three-dimensional output component **404** to output the corresponding keyboard and sends a command to the sensing component **406** so that the sensing component can monitor whether the user presses a key in real time.

The three-dimensional output component **404** (which implements the function of the above-mentioned first displaying component **22**) can output various preset keyboard formats, wherein each keyboard format has corresponding parameters, these parameters being used for configuring the coordinate range of each key so as to compose the coordinate system.

The sensing component **406** (which implements the functions of the above-mentioned detecting component **24,** determining component **26** and second displaying component **28**) monitors whether there is a key input and sends the parameters required to determine the key value to the virtual three-dimensional keyboard processing component **402** to perform calculation so as to determine the key value, and completes the valid input of the key, that is, displaying the user input on a screen of the terminal.

In one preferred embodiment, the sensing component **406** is below the three-dimensional output component **404,** and the function of the sensing component **406** is to judge the valid input of the key. The sensing component **406,** which contains a group of infrared transceiving-apparatuses and one miniature motor, is configured to measure the distance between the user input medium and the sensing component **406.** The implementation principle thereof is as follows: the infrared transceiving-apparatus is fixed on the miniature motor (i.e. a step motor); the miniature motor drives the infrared transceiving-apparatus to quickly scan whether there is a key press within a 180 degrees range at one side of the virtual three-dimensional keyboard; when the infrared transceiving-apparatus receives a reflected infrared ray, a reflection time and a rotation angle of the miniature motor are recorded at this time; and the distance between the infrared transceiving-apparatus and the input medium is calculated from the infrared transceiving time and the infrared transceiving speed, and then the coordinate of the position where the input medium is located is calculated from the angle of the miniature motor. The coordinate value is matched with the preset coordinate system, a certain specific key value in the keyboard corresponding to the position where the input medium is located is obtained.

The three-dimensional output component **404,** the sensing component **406** and the virtual three-dimensional keyboard processing component **402** (which can be implemented with the CPU of the terminal) of the terminal device perform communication via a serial bus. The virtual three-dimensional keyboard processing component **402** of the terminal device controls the three-dimensional output component **404** to output a corresponding keyboard format and size and the size of each key, and then processes the parameters such as the keyboard size and the key sizes, and fits same to the distance parameter and the position parameter returned by the sensing component **406** so as to determine a valid key input.

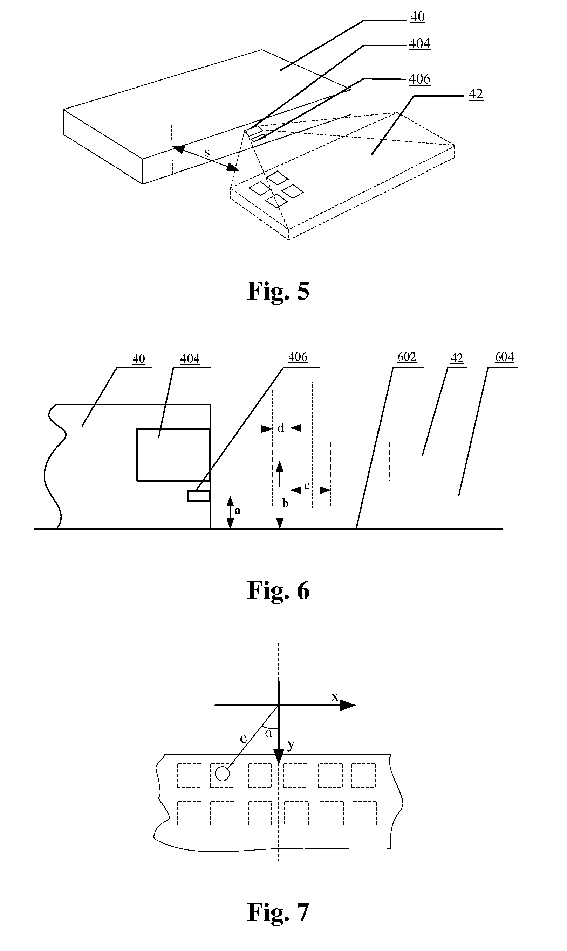

Fig. 5 is an overall schematic diagram of a virtual three-dimensional keyboard and a terminal according to a preferred embodiment of the present invention. As shown in Fig. 5, when a terminal **40** is placed on a desk, there is a three-dimensional output component **404** and a sensing component **406** at one side thereof. When a user needs to use a virtual three-dimensional keyboard, he or she can open the virtual three-dimensional keyboard by operating an interface software of the terminal **40,** and at this moment, the virtual three-dimensional keyboard processing component **402** controls the three-dimensional output component **404** to output a three-dimensional image of a standard keyboard (the virtual three-dimensional keyboard can certainly also be displayed in a user-defined keyboard format). Meanwhile, the virtual three-dimensional keyboard processing component **402** controls the sensing component **406** to detect the distance and the position of the user input medium (for example, a finger) in real time. The virtual three-dimensional keyboard **42** is an image of the virtual three-dimensional keyboard output by the three-dimensional output component **404,** and its region size (W*L), key spacing d, key size e and its distance s with the three-dimensional output component **404** are all adjustable parameters. In a corresponding selected keyboard mode, the parameters of the virtual three-dimensional keyboard output by the three-dimensional output component **404** are all controllable, that is, W, L, d, e and s therein can all be preset designated parameters, and these parameters will all be applied in an algorithm for determining the key value. In the condition that the above-mentioned parameters are known, a coordinate range of a region where each key is located can be calculated.

Fig. 6 is a sectional schematic diagram of a virtual three-dimensional keyboard and a terminal according to a preferred embodiment of the present invention. As shown in Fig. 6, a plane **602** is the plane where the terminal device is placed and can be a desk or other planes, and a desk is taken as an example in the present preferred embodiment. When the terminal **40** is placed on the plane **602,** the distance between the position where the sensing component **406** is located and the plane **602** is a, and a virtual plane **604** which has a distance a from the plane **602** and is parallel to the plane **602** is taken as a virtual sensor layer so as to be used to confirm whether there is a key press, wherein as regards the value of a, the smaller the better. When the input medium (here a finger is taken as an example) clicks a certain key on the virtual three-dimensional keyboard 42, the finger firstly passes through the virtual keyboard region and then passes through a vertical projection region of the key on the sensor layer, and when the finger toughs the desk, the key press action ends. Since an error report of a key press event is to be avoided, the sensor layer needs to be close enough to the desk, so as to avoid the case where when a finger presses, other fingers are detected mistakenly and reported since they are too close to the desk. That is, when the sensing component **406** detects that the finger passes through the sensor layer, it will feed back the event of key press and report same to the virtual three-dimensional keyboard processing component **402.** The distance from the horizontal direction centre line of the virtual three-dimensional keyboard to the desk is b, wherein b must be greater than or equal to a. The distance among each key of the virtual three-dimensional keyboard is d, wherein each key is defined as a cube with a side being e. A coordinate range of a region where each key is located can be determined from the above-mentioned parameters.

Fig. 7 is a schematic diagram of the coordinate system calculation of a key input according to a preferable embodiment of the present invention. As shown in Fig. 7, the system takes the centre of the sensing component **406** as a coordinate origin, the circle is where the finger is located, the distance from the finger to the coordinate origin is c, a line where one side of the terminal is located is taken as an x axis, a line in the direction of the three-dimensional output is taken as a y axis, the entire coordinate system is located in the plane where the sensor layer is located, and the y axis serves as a zero degree angle direction of the miniature motor at the same time. Since the sensor layer is located right below the virtual three-dimensional keyboard, the position of each virtual key correspondingly has a region of the same size after vertically corresponding to the sensor layer, wherein the region has a range in the entire coordinate system. The coordinate of each key is a range: x₁ < x < x₂, y₁ < y < y₂, and the coordinate ranges of all keys are aggregated together to form the coordinate system of the virtual three-dimensional keyboard, and after the infrared transceiving-apparatus detects a finger, it records the current rotation angle α of the miniature motor.

The distance c from the detected finger to the infrared transceiving-apparatus can be calculated through the operating time t of the infrared transceiving-apparatus and the speed v of the infrared ray, c = vt/2. In addition, the coordinate of the position where the finger is located can be calculated according to the rotation angle α of the miniature motor: x = c*sinα, y = c*cosα.

After the coordinate of the position where the finger is located is calculated, the coordinate is matched with the coordinate system so as to determine the key value. When the user operates the virtual three-dimensional keyboard, the action of pressing each key actually takes the click on the desk as the end of the action, and thus it is also ensured that when each time of a key press, the finger will pass through the coordinate region of the sensor layer, thereby avoiding the occurrence of miss judgement.

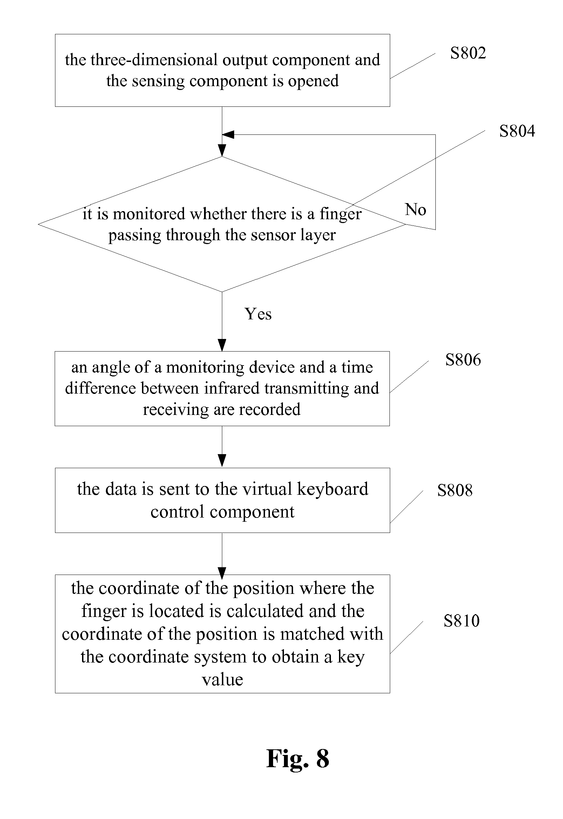

Fig. 8 is a flowchart of an input method according to a preferable embodiment of the present invention. As shown in Fig. 8, the method comprises the following step S802 to step S810.

Step S802, when the user starts using the virtual three-dimensional keyboard, the control centre (i.e. the virtual three-dimensional keyboard processing component **402**) sends a starting instruction to open the three-dimensional output component **404** and the sensing component **406** in sequence. The three-dimensional output component **404** will output, according to a predetermined protocol, a form of three-dimensional keyboard thereof.

Step 804, the sensing component **406** monitors, through uninterrupted scanning, whether there is a finger passing through the sensor layer, that is, there is a key input. The time of completing the scanning of the entire keyboard region in sequence is taken as a period, and when one period ends, if no key press is discovered, step S802 will be automatically restarted. When it is detected that there is a finger passing through the sensor layer, the process turns to step S806.

Step S806, the current rotation angle α of the miniature motor, and a time difference between transmitting and receiving of the infrared transceiving-apparatus are recorded.

Step S808, data obtained in step S806 is transmitted to the virtual three-dimensional keyboard processing component 402 of the virtual keyboard through a protocol.

Step S810, the virtual three-dimensional keyboard processing component **402** calculates, according to a corresponding algorithm and the provided parameters, a corresponding coordinate of the position where the finger is located in the sensor layer, and matches the coordinate with the preset coordinate system to obtain a coordinate value, and then executes step S804 again.

By means of the above-mentioned steps, the use of the virtual three-dimensional keyboard can be accomplished. It should be noted that a key input is sensed by means of infrared monitoring above, the executor can also perform same by means of other monitoring and distance measurement methods, but generally, key input is implemented by calculating the coordinate of an input medium (or the position of the key).

It should be noted that the steps shown in the flowchart of the drawings can be executed, for example, in a computer system with a set of instructions executable by a computer, in addition, a logic order is shown in the flowchart, but the shown or described steps can be executed in a different order under some conditions.

In summary, according to the above-mentioned embodiments of the present invention, an input method, apparatus and terminal are provided. By means of the embodiments of the present invention, the keyboard is displayed at one side of the terminal in a three-dimensional virtual mode without occupying the space on the terminal screen, thus making it convenient for a user to refer to the content displayed on the terminal screen; the user can click a key of the virtual three-dimensional keyboard, and the terminal determines the press of the key and determines the key value, thus achieving a quick and convenient text input; and moreover, the user can self-define the size of the virtual three-dimensional keyboard and the spacings among the keys, thus reducing the probability of error touch to some extent.

Obviously, those skilled in the art shall understand that the above-mentioned components and steps of the embodiments of the present invention can be realized by using general purpose calculating device, can be integrated in one calculating device or distributed on a network which consists of a plurality of calculating devices. Alternatively, the components and the steps of the disclosure can be realized by using the executable program code of the calculating device. Consequently, they can be stored in the storing device and executed by the calculating device, or they are made into integrated circuit component respectively, or a plurality of components or steps thereof are made into one integrated circuit component. In this way, the embodiments of the present invention are not restricted to any particular hardware and software combination.

The descriptions above are only the preferable embodiment of the disclosure, which are not used to restrict the disclosure, for those skilled in the art, the disclosure may have various changes and variations. Any amendments, equivalent substitutions, improvements, etc. within the principle of the disclosure are all included in the scope of the protection of the disclosure.

## Claims

1. An input method, **characterized by** comprising:
displaying a virtual three-dimensional keyboard at an exterior of a terminal;
detecting that there is a key input on the virtual three-dimensional keyboard; and
determining a key value according to the key input, and displaying the key value on a screen of the terminal.

2. The method according to claim 1, **characterized in that** determining the key value according to the key input comprises:
calculating a position coordinate of the key input with respect to the terminal;
matching the position coordinate of the key input with a preset coordinate set of the virtual three-dimensional keyboard; and
determining the key value according to a matching result.

3. The method according to claim 2, **characterized in that** before detecting that there is the key input on the virtual three-dimensional keyboard, the method further comprises:
detecting whether there is the key input on the virtual three-dimensional keyboard utilizing infrared reflective characteristics.

4. The method according to claim 3, **characterized in that** detecting whether there is the key input on the virtual three-dimensional keyboard utilizing infrared reflective characteristics comprises:
detecting whether there is the key input on the virtual three-dimensional keyboard utilizing the rotation of an infrared transceiving-apparatus.

5. The method according to claim 4, **characterized in that** calculating the position coordinate of the key input with respect to the terminal comprises:
when the infrared transceiving-apparatus receives a reflected infrared ray, recording a reflection time and a rotation angle of the infrared transceiving-apparatus with respect to a predetermined axis;
calculating the distance from the key input to the infrared transceiving-apparatus according to the reflection time and a speed of the infrared ray; and
calculating the position coordinate of the key input according to the distance from the key input to the infrared transceiving-apparatus and the rotation angle of the infrared transceiving-apparatus with respect to the predetermined axis.

6. The method according to claim 4, **characterized in that** a rotatable motor is disposed on the infrared transceiving-apparatus.

7. The method according to claim 2, **characterized in that** the coordinate set of the virtual three-dimensional keyboard is a set of coordinate range of each key on the virtual three-dimensional keyboard, wherein the coordinate range of each key is calculated according to the size of an occupation region, key sizes, key spacings, the distance between each key and the terminal of the virtual three-dimensional keyboard which is preset.

8. The method according to any one of claims 1-6, **characterized in that** the virtual three-dimensional keyboard is a standard keyboard or a keyboard of a user-defined keyboard format.

9. An input apparatus, comprising:
a first displaying component configured to display a virtual three-dimensional keyboard at an exterior of a terminal;
a detecting component configured to detect that there is a key input on the virtual three-dimensional keyboard;
a determining component configured to determine a key value according to the key input; and
a second displaying component configured to display the key value on a screen of the terminal.

10. The apparatus according to claim 9, **characterized in that** the determining component comprises:
a calculating element configured to calculate a position coordinate of the key input with respect to the terminal;
a matching element configured to match the position coordinate of the key input with a preset coordinate set of the virtual three-dimensional keyboard; and
a determining element configured to determine the key value according to a matching result.

11. The apparatus according to claim 10, **characterized in that** the detecting component is further configured to detect whether there is the key input on the virtual three-dimensional keyboard utilizing infrared reflective characteristics.

12. A terminal, **characterized by** comprising: the input apparatus as claimed in any one of claims 9 to 11.
